(19) Europäisches Patentamt
European Patent Office
Office européen des brevets

(11) EP 4 456 231 A1

(12) EUROPEAN PATENT APPLICATION
published in accordance with Art. 153(4) EPC

(43) Date of publication:
**30.10.2024 Bulletin 2024/44**

(21) Application number: **21969402.3**

(22) Date of filing: **29.12.2021**

(51) International Patent Classification (IPC):
***H01M 10/0525*** *(2010.01)*

(52) Cooperative Patent Classification (CPC):
**H01M 10/0525;** Y02E 60/10

(86) International application number:
**PCT/CN2021/142397**

(87) International publication number:
**WO 2023/123027 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventor: **WANG, Kefei**
**Ningde City, Fujian 352100 (CN)**

(74) Representative: **Icosa**
**83 avenue Denfert-Rochereau**
**75014 Paris (FR)**

# (54) ELECTROCHEMICAL APPARATUS AND ELECTRONIC APPARATUS

(57) This application relates to an electrochemical apparatus and an electronic apparatus. Specifically, this application provides an electrochemical apparatus including: a positive electrode, a negative electrode, and an electrolyte, where the positive electrode includes a positive electrode current collector and a positive electrode active material layer formed on the positive electrode current collector. The positive electrode active material layer includes a positive electrode active material, where the positive electrode active material includes lithium nickel cobalt manganate containing aluminum, zirconium, and tungsten. The electrolyte includes a dinitrile compound. The electrochemical apparatus according to this application has improved overcharge resistance and safety under high temperature and high pressure.

EP 4 456 231 A1

## Description

### TECHNICAL FIELD

This application relates to the field of energy storage, specifically to an electrochemical apparatus and an electronic apparatus, and in particular to a lithium-ion battery.

### BACKGROUND

With the development of technologies and the increasing demand for mobile apparatuses, demands for electrochemical apparatuses (for example, lithium-ion batteries) under different usage conditions have increased significantly, and thus higher requirements are imposed on performance of lithium-ion batteries, as reflected in: high capacity, appropriate cycle life, good high-temperature performance, good high-rate discharge performance, overcharge resistance, safety, and the like.

During the use of a lithium-ion battery, when a charging control circuit fails, the lithium-ion battery is prone to overcharge, leading to an increase in internal pressure and temperature, and this may compromise the safety of the lithium-ion battery.

In view of this, it is necessary to provide an electrochemical apparatus and electronic apparatus with improved overcharge resistance and safety under high temperature and high pressure.

### SUMMARY

Some embodiments of this application solve the problems existing in the prior art to some extent by providing an electrochemical apparatus and electronic apparatus with improved overcharge resistance and safety under high temperature and high pressure.

According to one aspect of this application, this application provides an electrochemical apparatus including a positive electrode, a negative electrode, and an electrolyte, where the positive electrode includes a positive electrode current collector and a positive electrode active material layer formed on the positive electrode current collector, and the positive electrode active material layer includes a positive electrode active material, where the positive electrode active material includes lithium nickel cobalt manganate containing aluminum, zirconium, and tungsten; and the electrolyte includes a dinitrile compound.

According to an embodiment of this application, based on a mass of the positive electrode active material, percentages of aluminum, zirconium, and tungsten are a%, b%, and c%, respectively, and a, b, and c satisfy: $0.1 \leq a+b+c \leq 1$.

According to an embodiment of this application, based on a mass of the positive electrode active material, percentages of aluminum, zirconium, and tungsten are a%, b%, and c%, respectively, and a, b, and c satisfy: $1 \leq (b+c)/a \leq 5$.

According to an embodiment of this application, based on a mass of the positive electrode active material, percentages of zirconium and tungsten are b% and c%, respectively, and b and c satisfy: $1 \leq b/c \leq 3$.

According to an embodiment of this application, based on a mass of the positive electrode active material, a percentage of tungsten is c%; based on a mass of the electrolyte, a percentage of the dinitrile compound is x%; and c and x satisfy: $10 \leq x/c \leq 100$.

According to an embodiment of this application, the electrolyte further includes a trinitrile compound.

According to this embodiment of this application, based on a mass of the electrolyte, a percentage of the dinitrile compound is x%, a percentage of the trinitrile compound is y%, and x and y satisfy: $1 \leq x+y \leq 15$.

According to this embodiment of this application, x and y satisfy: $1 \leq x/y \leq 5$.

According to an embodiment of this application, the electrolyte further includes a sulfur-oxygen double bond-containing compound, and based on a mass of the electrolyte, a percentage of the sulfur-oxygen double bond-containing compound is z%; based on a mass of the positive electrode active material, a percentage of tungsten is c%; and z and c satisfy: $1 \leq z/c \leq 50$.

According to this embodiment of this application, the sulfur-oxygen double bond-containing compound includes at least one of bicyclic sulfate, bicyclic sultone, ethylene sulfate, propylene sulfate, 1,3-propane sultone, 1,3-propene sultone, methylene methanedisulfonate, or ethylene methanedisulfonate.

According to this embodiment of this application, the bicyclic sulfate includes a compound of formula I:

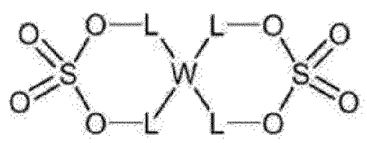

(formula I),

where

W is selected from

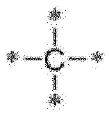 , 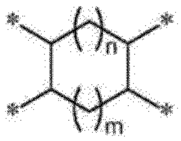 , 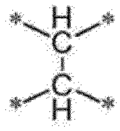 ,

or

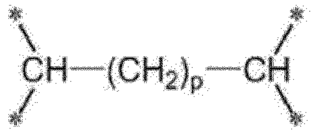 ;

L is independently selected from a single bond or a methylene group;
m is 1, 2, 3, or 4;
n is 0, 1, or 2; and
p is 0, 1, 2, 3, 4, 5, or 6.

According to this embodiment of this application, the compound of formula I includes at least one of the following:

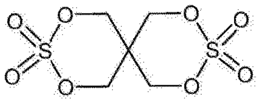 (formula I-1), 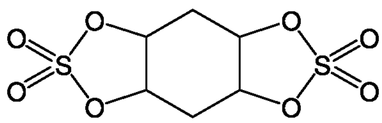 (formula I-2), 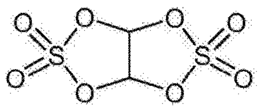 (formula I-3),

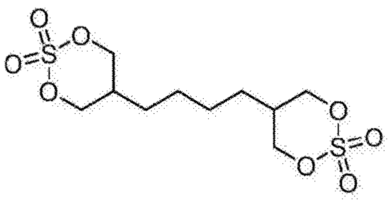 (formula I-4), or 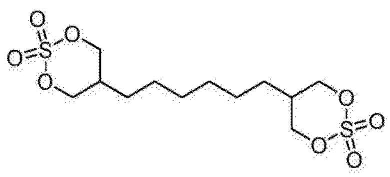

(formula I-5).

According to this embodiment of this application, the bicyclic sultone includes a compound of formula II:

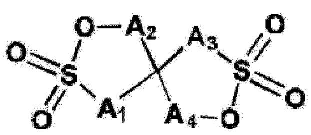 (formula II),

where $A_1$, $A_2$, $A_3$, and $A_4$ each are independently selected from a substituted or unsubstituted C1-3 alkylene group, and during substitution, a substituent is selected from a C1-5 alkyl group, halogen, or a halogenated C1-5 alkyl group.

According to this embodiment of this application, the compound of formula II includes at least one of the following:

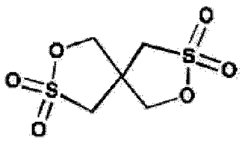 (formula II-1), 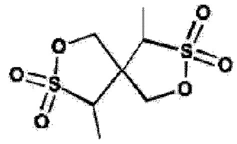 (formula II-2),

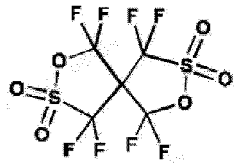 (formula II-3), 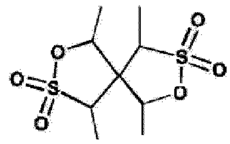 (formula II-4),

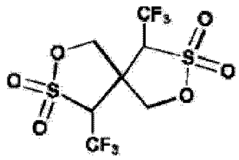 (formula II-5), 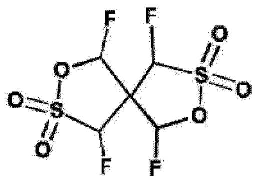 (formula II-6),

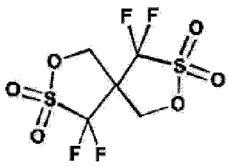 (formula II-7), 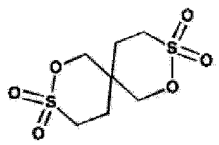 (formula II-8),

or

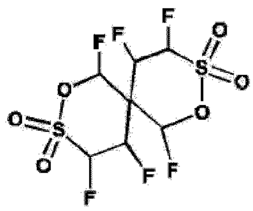 (formula II-9).

According to an embodiment of this application, the electrochemical apparatus satisfies at least one of the following:

(a) based on a mass of the positive electrode active material, a percentage of aluminum is a%, with a value range of a from 0.05 to 1;
(b) based on the mass of the positive electrode active material, a percentage of zirconium is b%, with a value range of b from 0.05 to 1;
(c) based on the mass of the positive electrode active material, a percentage of tungsten is c%, with a value range of c from 0.05 to 1;
(d) based on a mass of the electrolyte, a percentage of the dinitrile compound is x%, with a value range of x from 0.1 to 15;
(e) the electrolyte further includes a trinitrile compound, and based on the mass of the electrolyte, a percentage of the trinitrile compound is y%, with a value range of y from 0.1 to 8; or
(f) the electrolyte further includes a sulfur-oxygen double bond-containing compound, and based on the mass of the electrolyte, a percentage of the sulfur-oxygen double bond-containing compound is z%, with a value range of z from 0.01 to 5.

According to an embodiment of this application, the electrochemical apparatus satisfies at least one of the following:

(g) the value range of a is from 0.1 to 0.5;
(h) the value range of b is from 0.1 to 0.5;

(i) the value range of c is from 0.1 to 0.5;
(j) the value range of x is from 0.5 to 10;
(k) the value range of y is from 0.5 to 5; or
(1) the value range of z is from 0.1 to 3.

According to an embodiment of this application, the electrolyte further includes at least one of lithium difluorophosphate or a compound of formula III,

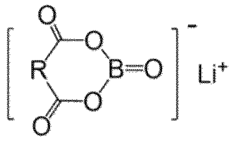 (formula III),

where R is a single bond or a C1-4 alkylene group.
According to an embodiment of this application, the electrolyte further includes at least one of fluoroethylene carbonate, vinylene carbonate, or 1-propylphosphoric acid cyclic anhydride.
According to another aspect of this application, this application provides an electronic apparatus including the electrochemical apparatus according to this application.
The positive electrode active material layer used in this application has improved interface stability under thermal runaway and can fully suppress the overcharge resistance of the electrochemical apparatus under high pressure and high temperature. In conjunction with the use of an electrolyte including a dinitrile compound, the safety of the electrochemical apparatus can be significantly improved.
Additional aspects and advantages of some embodiments of this application are partly described and presented in subsequent descriptions, or explained by implementation of these embodiments of this application.

## DETAILED DESCRIPTION OF EMBODIMENTS

Some embodiments of this application are described in detail below. Some embodiments of this application should not be construed as limitations on this application.
Unless otherwise expressly indicated, the following terms used in this specification have the meanings described below.
In the specific embodiments and claims, a list of items connected by the term "at least one of" may mean any combination of the listed items. For example, if items A and B are listed, the phrase "at least one of A and B" means only A; only B; or A and B. In another instance, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements. The term "at least one type of" has the same meaning as the term "at least one of".
As used herein, the term "alkyl group" is intended to be a linear saturated hydrocarbon structure having 1 to 20 carbon atoms. The term "alkyl group" is also intended to be a branched or cyclic hydrocarbon structure having 3 to 20 carbon atoms. References to an alkyl group with a specific carbon number are intended to cover all geometric isomers with the specific carbon number. Therefore, for example, "butyl group" is meant to include n-butyl group, sec-butyl group, isobutyl group, tert-butyl group, and cyclobutyl group; and "propyl group" includes n-propyl group, isopropyl group, and cyclopropyl group. Instances of the alkyl group include but are not limited to a methyl group, an ethyl group, an n-propyl group, an isopropyl group, an cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, and a norbornyl group.
The term "alkylidene group" used herein means a straight-chain or branched divalent saturated hydrocarbyl group. Unless otherwise defined, the alkylene group usually contains 2 to 10 carbon atoms and includes (for example) -$C_{2-3}$ alkylene and-$C_{2-6}$ alkylene-. Representative alkylidene groups include (for example) methylene group, ethane-1,2-diyl ("ethylene"), propane-1,2-diyl, propane-1,3-diyl, butane-1,4-diyl, and pentane-1,5-diyl.
As used herein, the term "halogen" refers to the elements in Group VIIA of the periodic table of chemical elements, including fluorine (F), chlorine (Cl), Bromine (Br), iodine (I), and astatine (At).
During the use of an electrochemical apparatus (for example, a lithium-ion battery), when a charging control circuit fails, the lithium-ion battery is prone to overcharge. When the charging voltage reaches a decomposition voltage of an electrolyte, the electrolyte decomposes on a positive electrode of the lithium-ion battery, producing gas and causing the

internal pressure of the lithium-ion battery to rise, which makes the lithium-ion battery lose stability due to heat accumulation inside and seriously affects the safety of the battery. Main methods for overcharge protection of lithium-ion batteries include a physical method (for example, an integrated circuit protection method) and a chemical method (for example, an overcharge protection additive method). The integrated circuit protection method is reliable, fast, and widely used, but the integrated circuit structure is complex, requires plastic packaging, and is expensive. The overcharge protection additive method usually uses an additive based on polymerization, such as biphenyl and cyclohexylbenzene, or an additive based on a reduction-oxidation reciprocating reaction, such as lithium halide, metallocene and derivatives thereof, and benzene derivatives. However, biphenyl and cyclohexylbenzene will increase internal resistance of lithium-ion batteries and degrade performance of the lithium-ion batteries. When a lithium-ion battery is under a high charging current, lithium halide, metallocene and derivatives thereof, benzene derivatives, or the like cannot effectively play the role of overcharge protection while degrading cycling performance and other performance of the lithium-ion battery.

In the industry, elements such as aluminum, zirconium, or tungsten have been added to positive electrode active materials, with the purpose of changing the surface energy of the microstructure of a material, significantly enhancing the cycling stability of the material. However, there have been no reports of adding elements such as aluminum, zirconium, or tungsten to the positive electrode active materials to improve the safety of electrochemical apparatuses. In addition, it is generally believed that the use of a dinitrile compound in electrolyte can reduce the deposition of dissolved transition metal ions. Based on existing knowledge, it is impossible to predict the influence on the overcharge resistance and safety performance of an electrochemical apparatus by simultaneously using a positive electrode active material including lithium nickel cobalt manganate containing aluminum, zirconium, and tungsten and an electrolyte including a dinitrile compound.

This application addresses issues related to the overcharge resistance and safety performance of an electrochemical apparatus by using lithium nickel cobalt manganate containing aluminum, zirconium, and tungsten as a positive electrode active material and an electrolyte including a dinitrile compound. Doping aluminum, zirconium, and tungsten in lithium nickel cobalt manganate can suppress the crystal phase transformation of lithium nickel cobalt manganate and can also effectively suppress the delamination of positive electrode active materials under high temperature and high pressure. The use of an electrolyte including a dinitrile compound can not only effectively passivate positive electrode surfaces, but also stabilize the bulk structure of the positive electrode active material. A specific combination of the positive electrode active material and the electrolyte in this application can not only effectively improve the overcharge resistance of the electrochemical apparatuses under high temperature and high pressure, but also significantly improve the safety of the electrochemical apparatuses (for example, short-circuit safety and thermal abuse safety).

## I. Positive electrode

The positive electrode includes a positive electrode current collector and a positive electrode active material layer formed on the positive electrode current collector. The positive electrode active material layer may be one layer or a plurality of layers. The positive electrode active material layer includes positive electrode active materials, and each of the plurality of the positive electrode active material layers may contain the same or different positive electrode active materials.

One main feature of the electrochemical apparatus according to this application is that the positive electrode active material includes lithium nickel cobalt manganate containing aluminum, zirconium, and tungsten. As compared with lithium cobalt oxide, a crystal structure obtained by doping lithium nickel cobalt manganate with aluminum, zirconium, and tungsten is more stable, with a more significant improvement in the overcharge resistance and safety of electrochemical apparatuses under high temperature and high pressure.

The inventors have found that simultaneous presence of elements aluminum, zirconium, and tungsten in a positive electrode active material can have an unexpected enhancement effect on the stability of the structure and electrode interface of the positive electrode active material under high voltage conditions. Further adjusting percentages of the three elements aluminum, zirconium, and tungsten can further obtain good overcharge resistance. Adjustment of a total percentage of the three elements aluminum, zirconium, and tungsten, or a ratio of a total percentage of elements zirconium and tungsten to a percentage of element aluminum, or a ratio of percentages of elements zirconium and tungsten, and other factors will cause changes in the bulk structure of a positive electrode material, changes in surface coating structure, changes in element content on surfaces of positive electrode material particles, and the stability of the interface between a positive electrode and an electrolyte, thereby affecting the performance of the entire electrochemical apparatus.

In some embodiments, based on a mass of the positive electrode active material, the percentages of aluminum, zirconium, and tungsten are a%, b%, and c% respectively, and a, b, and c satisfy: $0.1 \leq a+b+c \leq 1$. In some embodiments, $0.2 \leq a+b+c \leq 0.8$. In some embodiments, $0.3 \leq a+b+c \leq 0.5$. In some embodiments, a+b+c is 0.1, 0.2, 0.3, 0.4, 0.5, 0.6, 0.7, 0.8, 0.9, 1, or falls within a range defined by any two of the foregoing values. When the percentages of aluminum, zirconium, and tungsten in the positive electrode active material satisfy the foregoing relationship, this can effectively

maintain the stability of the lithium nickel cobalt manganate crystal structure under high pressure, effectively suppress continuous destruction of a passivation layer on the positive electrode surfaces during charge-discharge cycles of the lithium-ion battery, and reduce the number of repairs. Especially in the presence of a nitrile-based compound, the interface stability of the positive electrode active material layer can be more fully improved, thereby helping to further improve the overcharge resistance and safety of the electrochemical apparatus under high temperature and high pressure.

In some embodiments, based on a mass of the positive electrode active material, the percentages of aluminum, zirconium, and tungsten are a%, b%, and c% respectively, and a, b, and c satisfy: $1 \leq (b+c)/a \leq 5$. In some embodiments, $1 \leq (b+c)/a \leq 4$. In some embodiments, $2 \leq (b+c)/a \leq 3$. In some embodiments, (b+c)/a is 1, 1.5, 2, 2.5, 3, 3.5, 4, 4.5, 5, or falls within a range defined by any two of the foregoing values. When the percentages of aluminum, zirconium, and tungsten in the positive electrode active material satisfy the foregoing relationship, this helps to further improve the structural stability of the positive electrode active material layer during cycling of the electrochemical apparatus, thereby further improving the overcharge resistance and safety of the electrochemical apparatus under high temperature and high pressure.

In some embodiments, based on a mass of the positive electrode active material, percentages of zirconium and tungsten are b% and c% respectively, and b, and c satisfy: $1 \leq b/c \leq 3$. In some embodiments, $1 \leq b/c \leq 2.5$. In some embodiments, $1 \leq b/c \leq 2$. In some embodiments, b/c is 1, 1.5, 2, 2.5, 3, or falls within the range defined by any two of the foregoing values. When the percentages of zirconium and tungsten in the positive electrode active material satisfy the foregoing relationship, this helps to further improve the structural stability of the positive electrode active material layer during cycling of the electrochemical apparatus, thereby further improving the overcharge resistance and safety of the electrochemical apparatus under high temperature and high pressure.

In some embodiments, based on the mass of the positive electrode active material, the percentage of aluminum is a%, with a value range of a from 0.05 to 1. In some embodiments, the value range of a is from 0.1 to 0.5. In some embodiments, a is 0.05, 0.1, 0.2, 0.3, 0.4, 0.5, 0.6, 0.7, 0.8, 0.9, 1, or within a range defined by any two of the foregoing values. When the percentage of aluminum in the positive electrode active material is within the foregoing range, this helps to further improve the structural stability of the positive electrode active material layer during cycling of the electrochemical apparatus, thereby further improving the overcharge resistance and safety of the electrochemical apparatus under high temperature and high pressure.

In some embodiments, based on the mass of the positive electrode active material, the percentage of zirconium is b%, with a value range of b from 0.05 to 1. In some embodiments, the value range of b is from 0.1 to 0.5. In some embodiments, b is 0.05, 0.1, 0.2, 0.3, 0.4, 0.5, 0.6, 0.7, 0.8, 0.9, 1, or within a range defined by any two of the foregoing values. When the percentage of zirconium in the positive electrode active material is within the foregoing range, this helps to further improve the structural stability of the positive electrode active material layer during cycling of the electrochemical apparatus, thereby further improving the overcharge resistance and safety of the electrochemical apparatus under high temperature and high pressure.

In some embodiments, based on the mass of the positive electrode active material, the percentage of tungsten is c%, with a value range of c from 0.05 to 1. In some embodiments, c is 0.05, 0.1, 0.2, 0.3, 0.4, 0.5, 0.6, 0.7, 0.8, 0.9, 1, or within a range defined by any two of the foregoing values. When the percentage of tungsten in the positive electrode active material is within the foregoing range, this helps to further improve the structural stability of the positive electrode active material layer during cycling of the electrochemical apparatus, thereby further improving the overcharge resistance and safety of the electrochemical apparatus under high temperature and high pressure.

In some embodiments, a material with a composition different from that of the positive electrode active material may be attached to a surface of the positive electrode active material. Instances of the attached material may include but are not limited to: oxides such as aluminum oxide, silicon dioxide, titanium dioxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon. The material being attached to the surface of the positive electrode active material can suppress oxidation reaction of an electrolyte on the surface of the positive electrode active material and prolong service life of the electrochemical apparatus. When the amount of the material attached to the surface is too small, the effect cannot be fully exerted. When the amount of the material attached to the surface is too large, deintercalation and intercalation of lithium ions are hindered, and thus resistance sometimes increases. In this application, the material attached to the surface of the positive electrode active material and having the composition different from that of the positive electrode active material is also referred to as a "positive electrode active material".

In some embodiments, shapes of positive electrode active material particles include but are not limited to block, polyhedron, sphere, ellipsoid, plate, needle, and column. In some embodiments, the positive electrode active material particles include primary particles, secondary particles, or a combination thereof. In some embodiments, the primary particles may agglomerate to form the secondary particles.

The positive electrode conductive materials are not limited in type, and any known conductive material may be used. Instances of the positive electrode conductive material may include but are not limited to: graphite such as natural graphite and artificial graphite; carbon black such as acetylene black; carbon materials including amorphous carbon such

as needle coke; carbon nanotubes; and graphene. The positive electrode conductive materials may be used alone or in any combination.

A positive electrode binder used in the manufacture of the positive electrode active material layer is not particularly limited in type. In a case of a coating method, any material capable of being dissolved or dispersed in a liquid medium used in the manufacture of electrodes can be used. Instances of the positive electrode binder may include but are not limited to one or more of the following: a resin-based polymer such as polyethylene, polypropylene, polyethylene terephthalate, polymethyl methacrylate, polyimide, aromatic polyamide, cellulose, and cellulose nitrate; a rubber-like polymer such as styrene-butadiene rubber (SBR), nitrile rubber (NBR), fluorine rubber, isoprene rubber, polybutadiene rubber, and ethylene-propylene rubber; a thermoplastic elastomer polymer such as a styrene butadiene styrene block copolymer or its hydride, an ethylene propylene diene terpolymer (EPDM), a styrene ethylene butadiene ethylene copolymer, and a styrene isoprene styrene block copolymer or its hydride; a soft resinous polymer such as syndiotactic-1,2-polybutadiene, polyvinyl acetate, an ethylene vinyl acetate copolymer, and a propylene-$\alpha$-olefin copolymer; a fluorine-based polymer such as polyvinylidene fluoride (PVDF), polytetrafluoroethylene, fluorinated polyvinylidene fluoride, and polytetrafluoroethylene-ethylene copolymer; and a polymer composition with ionic conductivity of alkali metal ions (especially lithium ions). The foregoing positive electrode binders may be used alone or in any combination.

Solvents used for forming a positive electrode slurry are not limited in type, provided that the solvent is capable of dissolving or dispersing the positive electrode active material, the conductive material, a positive electrode binder, and a thickener used as appropriate to needs. Instances of the solvent used for forming the positive electrode slurry may include any one of an aqueous solvent or an organic solvent. Instances of an aqueous medium may include but are not limited to water and a mixed medium of alcohols and water. Instances of an organic medium may include but are not limited to: aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide and dimethyl sulfoxide.

The thickener is typically used to adjust the viscosity of the slurry. In a case that the aqueous medium is used, the thickener and a styrene-butadiene rubber (SBR) emulsion can be used for slurrying. The thickener is not particularly limited in type. Instances of the thickener may include but are not limited to carboxymethyl cellulose, methyl cellulose, hydroxymethyl cellulose, ethyl cellulose, polyvinyl alcohol, oxidized starch, phosphorylated starch, casein, and salts thereof. The foregoing thickeners may be used alone or in any combination.

The positive electrode current collector is not particularly limited in type and may be any known material suitable for serving as a positive electrode current collector. Instances of the positive electrode current collector may include but are not limited to: metal materials such as aluminum, stainless steel, nickel coating, titanium, and tantalum; and carbon materials such as carbon cloth and carbon paper. In some embodiments, the positive electrode current collector is made of a metal material. In some embodiments, the positive electrode current collector is made of aluminum.

To reduce electronic contact resistance of the positive electrode current collector and the positive electrode active material layer, a conductive additive may be included in the surface of the positive electrode current collector. Instances of the conductive additive may include but are not limited to carbon and precious metals such as gold, platinum, and silver.

The positive electrode may be prepared by forming the positive electrode active material layer containing the positive electrode active material and the binder on the current collector. The positive electrode using the positive electrode active material can be prepared in a conventional method as follows: The positive electrode active material, the binder, and the conductive material and the thickener used as appropriate to needs are subjected to dry mixing to prepare a sheet, and then the obtained sheet is pressed onto the positive electrode current collector; or these materials are dissolved or dispersed in a liquid medium to prepare a slurry, and then the obtained slurry is applied onto the positive electrode current collector and drying is performed to form the positive electrode active material layer on the current collector. In this way, the positive electrode can be obtained.

In some embodiments, a mass percentage of the positive electrode active material in the positive electrode active material layer is 95%, preferably 96%, and further preferably 97%. In some embodiments, the mass percentage of the positive electrode active material in the positive electrode active material layer is 98%. In some embodiments, the mass percentage of the positive electrode active material in the positive electrode active material layer is 99%. When the mass percentage of the positive electrode active material in the positive electrode active material layer is within the foregoing range, this can significantly increase the energy density of the electrochemical apparatus.

When the positive electrode active material is primary particles, an average particle size of the positive electrode active material refers to a primary particle size of the positive electrode active material particles. When the primary particles of the positive electrode active material particles aggregate to form secondary particles, an average particle size of the

positive electrode active material particles refers to a secondary particle size of the positive electrode active material particles.

In some embodiments, the average particle size of the positive electrode active material is D μm, with a value range of D from 5 to 30. In some embodiments, the value range of D is from 10 to 25. In some embodiments, the value range of D is from 12 to 20. In some embodiments, D is 5, 7, 9, 10, 12, 15, 18, 20, 25, 30, or within a range defined by any two of the foregoing values.

When the average particle size of the positive electrode active material is within the foregoing range, the positive electrode active material with high tap density can be obtained, the degradation of the performance of the electrochemical apparatus can be suppressed, and problems such as generation of stripes in the preparation process of positive electrodes for electrochemical apparatuses can be prevented (that is, when the positive electrode active material, the conductive material, and the binder are slurried with a solvent and applied as a thin film). Mixing more than two kinds of positive electrode active materials with different average particle sizes can further improve fillibility in the preparation of positive electrodes.

The average particle size of the positive electrode active material can be measured using a laser diffraction/-scattering particle size distribution measuring apparatus. In a case that the LA-920 manufactured by HORIBA Corporation is used as a particle size distribution meter, a 0.1% sodium hexametaphosphate aqueous solution is used as a dispersion medium for measurement, and the measurement is performed with a measurement refractive index set to 1.24 after ultrasonic dispersion for 5 minutes. The average particle size of the positive electrode active material can alternatively be measured using a laser diffraction particle size analyzer (Shimadzu SALD-2300) and a scanning electron microscope (ZEISS EVO18, with the number of samples not less than 100).

## II. Electrolyte

The electrolyte used in the electrochemical apparatus according to this application includes an electrolytic salt and a solvent for dissolving the electrolytic salt. Another main feature of the electrochemical apparatus according to this application is that the electrolyte includes a dinitrile compound.

In some embodiments, the dinitrile compound includes at least one of succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy) propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, or 1,6-dicyano-2-methyl-3-hexene. The foregoing dinitrile compounds may be used alone or in any combination.

In some embodiments, based on a mass of the electrolyte, a percentage of the dinitrile compound is x%, and c and x satisfy: $10 \leq x/c \leq 100$. In some embodiments, $10 \leq x/c \leq 80$. In some embodiments, $20 \leq x/c \leq 80$. In some embodiments, x/c is 10, 15, 20, 25, 30, 35, 40, 45, 50, 55, 60, 65, 70, 75, 80, 85, 90, 95, 100, or falls within a range defined by any two of the foregoing values. When the percentage of tungsten in the positive electrode active material and the percentage of the dinitrile compound in the electrolyte satisfy the foregoing relationship, this helps to further improve the overcharge resistance and safety of the electrochemical apparatus under high temperature and high pressure.

In some embodiments, the electrolyte further includes a trinitrile compound.

In some embodiments, the trinitrile compound includes at least one of 1,3,5-pentanetricarbonitrile, 1,2,3-propanetricarbonitrile, 1,3,6-hexanetrinitrile, 1,2,6-hexanetrinitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy) pentane. The foregoing trinitrile compounds may be used alone or in any combination.

In some embodiments, based on a mass of the electrolyte, a percentage of the dinitrile compound is x%, a percentage of the trinitrile compound is y%, and x and y satisfy: $1 \leq x+y \leq 15$. In some embodiments, $2 \leq x+y \leq 12$. In some embodiments, $3 \leq x+y \leq 10$. In some embodiments, x+y is 1, 2, 3, 4, 5, 6, 7, 8, 9, 10, 11, 12, 13, 14, 15, or falls within a range defined by any two of the foregoing values. When the percentages of the dinitrile compound and the trinitrile compound in the electrolyte satisfy the foregoing relationship, this helps to further improve the overcharge resistance and safety of the electrochemical apparatus under high temperature and high pressure.

In some embodiments, based on the mass of the electrolyte, the percentage of the dinitrile compound is x%, with a value range of x from 0.1 to 15. In some embodiments, the value range of x is from 1 to 10. In some embodiments, the value range of x is from 2 to 8. In some embodiments, the value range of x is from 3 to 5. In some embodiments, x is 0.1, 0.5, 1, 1.5, 2, 3, 4, 5, 6, 7, 8, 9, 10, 12, 15, or within a range defined by any two of the foregoing values. When the percentage of the dinitrile compound in the electrolyte is within the foregoing range, this helps to further improve the overcharge

resistance and safety of the electrochemical apparatus under high temperature and high pressure.

In some embodiments, based on the mass of the electrolyte, the percentage of the trinitrile compound is y%, with a value range of y from 0.1 to 8. In some embodiments, the value range of y is from 0.5 to 6. In some embodiments, the value range of y is from 1 to 5. In some embodiments, y is 0.1, 0.5, 1, 1.5, 2, 3, 4, 5, 6, 7, 8, or within a range defined by any two of the foregoing values. When the percentage of the trinitrile compound in the electrolyte is within the foregoing range, this helps to further improve the overcharge resistance and safety of the electrochemical apparatus under high temperature and high pressure.

In some embodiments, the electrolyte further includes a sulfur-oxygen double bond-containing compound.

In some embodiments, the sulfur-oxygen double bond-containing compound includes at least one of the following compounds: cyclic sulfate, linear sulfate, linear sulfonate, cyclic sulfonate, linear sulfite, or cyclic sulfite.

In some embodiments, the cyclic sulfate includes but is not limited to one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, and 1,5-pentanediol sulfate.

In some embodiments, the linear sulfate includes but is not limited to one or more of the following: dimethyl sulfate, ethyl methyl sulfate, and diethyl sulfate.

In some embodiments, the linear sulfonate includes but is not limited to one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, and ethyl 2-(methanesulfonyloxy) propionate.

In some embodiments, the cyclic sulfonate includes but is not limited to one or more of the following: 1,3-propanesulfonate, 1-fluoro-1,3-propanesulfonate, 2-fluoro-1,3-propanesulfonate, 3-fluoro-1,3-propanesulfonate, 1-methyl-1,3-propanesulfonate, 2-methyl-1,3-propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propylene-1,3-sulfonate, 3-fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene disulfonate, and ethylene methane disulfonate.

In some embodiments, the linear sulfite includes but is not limited to one or more of the following: dimethyl sulfite, ethyl methyl sulfite, and diethyl sulfite.

In some embodiments, the cyclic sulfite includes but is not limited to one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, and 1,5-pentanediol sulfite.

In some embodiments, the sulfur-oxygen double bond-containing compound includes at least one of bicyclic sulfate, bicyclic sultone, ethylene sulfate, propylene sulfate, 1,3-propane sultone, 1,3-propene sultone, methylene methanedisulfonate, or ethylene methanedisulfonate.

In some embodiments, the bicyclic sulfate includes a compound of formula I:

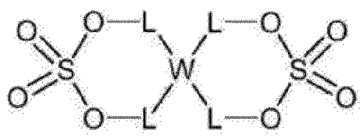 (formula I),

where

W is selected from

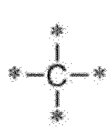 , 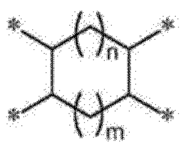 , 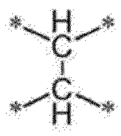 ,

or

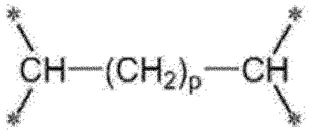 ;

L is independently selected from a single bond or a methylene group;
m is 1, 2, 3, or 4;
n is 0, 1, or 2; and
p is 0, 1, 2, 3, 4, 5, or 6.

In some embodiments, the compound of formula I includes at least one of the following:

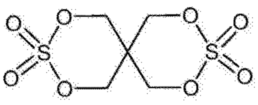 (formula I-1), 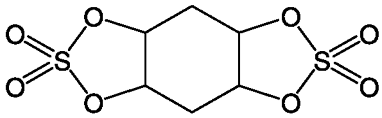 (formula I-2), 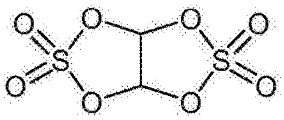 (formula I-3), 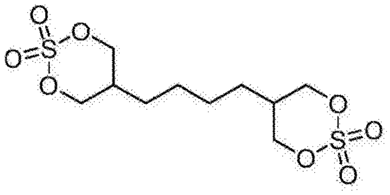 (formula I-4), or 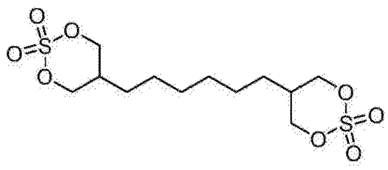 (formula I-5).

In some embodiments, the bicyclic sultone includes a compound of formula II:

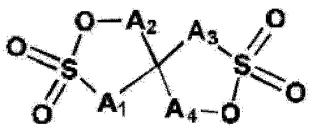 (formula II),

where $A_1$, $A_2$, $A_3$, and $A_4$ each are independently selected from a substituted or unsubstituted C1-3 alkylene group, and during substitution, a substituent is selected from a C1-5 alkyl group, halogen, or a halogenated C1-5 alkyl group.

In some embodiments, the compound of formula II includes at least one of the following:

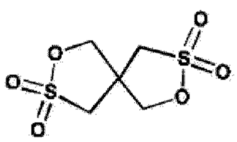 (formula II-1), 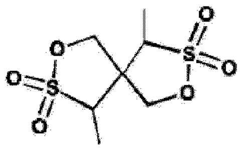 (formula II-2),

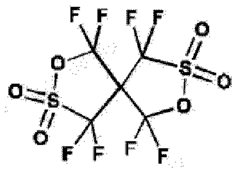 (formula II-3), 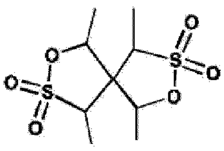 (formula II-4),

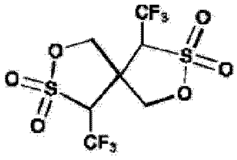 (formula II-5), 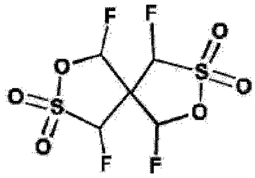 (formula II-6),

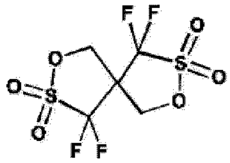 (formula II-7), 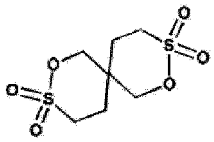 (formula II-8),

or

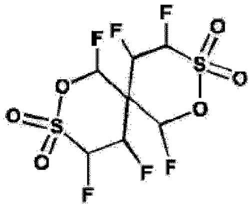 (formula II-9).

In some embodiments, based on the mass of the electrolyte, the percentage of the sulfur-oxygen double bond-containing compound is z%, and z and c satisfy: 1≤z/c≤50. In some embodiments, 5≤z/c≤40. In some embodiments, 10≤z/c≤35. In some embodiments, 15≤z/c≤30. In some embodiments, 20≤z/c≤25. In some embodiments, z/c is 1, 2, 5, 6, 7, 8, 9, 10, 15, 20, 25, 30, 35, 40, 45, 50, or falls within a range defined by any two of the foregoing values. When the percentage of the sulfur-oxygen double bond-containing compound in the electrolyte and the percentage of tungsten in the positive electrode active material satisfy the foregoing relationship, this helps to further improve the overcharge resistance and safety of the electrochemical apparatus under high temperature and high pressure.

In some embodiments, based on the mass of the electrolyte, the percentage of the sulfur-oxygen double bond-containing compound is z%, with a value range of z from 0.01 to 5. In some embodiments, the value range of z is from 0.1 to 3. In some embodiments, the value range of z is from 0.5 to 1. In some embodiments, z is 0.01, 0.1, 0.5, 1, 1.5, 2, 3, 4, 5, or within a range defined by any two of the foregoing values. When the percentage of the sulfur-oxygen double bond-containing compound in the electrolyte is within the foregoing range, this helps to further improve the overcharge resistance and safety of the electrochemical apparatus under high temperature and high pressure.

In some embodiments, the electrolyte further includes at least one of lithium difluorophosphate or a compound of formula III,

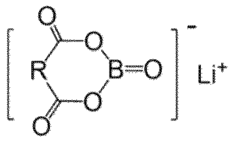 (formula III),

where R is a single bond or a C1-4 alkylene group.

In some embodiments, the compound of formula III includes a compound of formula III-1:

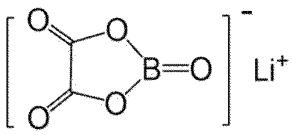 (Formula III-1).

In some embodiments, based on the mass of the electrolyte, a percentage of the compound of formula III is 0.1% to 2%. In some embodiments, based on the mass of the electrolyte, a percentage of the compound of formula III is 0.1% to 0.5%.

In some embodiments, the electrolyte further includes at least one of fluoroethylene carbonate, vinylene carbonate, or 1-propylphosphoric acid cyclic anhydride. These compounds help to stabilize the interface between a

positive electrode and the electrolyte, thereby further improving the overcharge resistance and safety of the electrochemical apparatus under high temperature and high pressure.

In some embodiments, based on the mass of the electrolyte, a percentage of the fluoroethylene carbonate, vinylene carbonate, or 1-propylphosphoric acid cyclic anhydride is 0.1% to 6%. In some embodiments, based on the mass of the electrolyte, a percentage of the fluoroethylene carbonate, vinylene carbonate, or 1-propylphosphoric acid cyclic anhydride is 0.5% to 5%. In some embodiments, based on the mass of the electrolyte, a percentage of the fluoroethylene carbonate, vinylene carbonate, or 1-propylphosphoric acid cyclic anhydride is 1% to 3%.

In some embodiments, the electrolyte further contains any non-aqueous solvent known in the prior art and capable of being used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, instances of the cyclic carbonate may include but are not limited to one or more of the following: ethylene carbonate (EC), propylene carbonate (PC), and butylene carbonate. In some embodiments, the cyclic carbonate has 3 to 6 carbon atoms.

In some embodiments, instances of the linear carbonate may include but are not limited to one or more of the following: dimethyl carbonate, ethyl methyl carbonate, diethyl carbonate (DEC), methyl n-propyl carbonate, ethyl n-propyl carbonate, and dipropyl carbonate. Instances of the linear carbonate substituted with fluorine may include but are not limited to one or more of the following: di(fluoromethyl) carbonate, di(difluoromethyl) carbonate, bis(trifluoromethyl) carbonate, di(2-fluoroethyl) carbonate, bis(2,2-difluoroethyl) carbonate, di(2,2,2-trifluoroethyl) carbonate, 2-fluoroethyl methyl carbonate, 2,2-difluoroethyl methyl carbonate, and 2,2,2-trifluoroethyl methyl carbonate.

In some embodiments, instances of the cyclic carboxylate may include but are not limited to one or more of the following: γ-butyrolactone and γ-valerolactone. In some embodiments, some hydrogen atoms in the cyclic carboxylate may be replaced with fluorine.

In some embodiments, instances of the linear carboxylates may include but are not limited to one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the linear carboxylate may be substituted with fluorine. In some embodiments, instances of the fluorine-substituted linear carboxylate may include but are not limited to methyl trifluoroacetate, ethyl trifluoroacetate, propyl trifluoroacetate, butyl trifluoroacetate, and 2,2,2-trifluoroethyl trifluoroacetate.

In some embodiments, instances of the cyclic ether may include but are not limited to one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, instances of the linear ether may include but are not limited to one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, instances of the phosphorus-containing organic solvent may include but are not limited to one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris (2,2,2-trifluoroethyl) phosphate, and tris (2,2,3,3,3-pentafluoropropyl) phosphate.

In some embodiments, instances of the sulfur-containing organic solvent may include but are not limited to one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the sulfur-containing organic solvent may be substituted with fluorine.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte of this application includes cyclic carbonate, linear carbonate, cyclic carboxylate, linear carboxylate, and a combination thereof. In some embodiments, the solvent used in the electrolyte of this application includes an organic solvent selected from a group consisting of the following materials: ethylene carbonate, propylene carbonate, diethyl carbonate, ethyl propionate, propyl propionate, propyl acetate, ethyl acetate, and a combination thereof. In some embodiments, the solvent used in the electrolyte of this application includes ethylene carbonate, propylene carbonate, diethyl carbonate, ethyl propionate, propyl propionate, γ-butyrolactone, and a combination thereof.

In some embodiments, the electrolytic salt is not particularly limited, and any material well-known as an

electrolytic salt can be used. For a lithium secondary battery, a lithium salt is typically used as the electrolytic salt. Instances of the electrolytic salt may include but are not limited to: inorganic lithium salts such as $LiPF_6$, $LiBF_4$, $LiClO_4$, $LiAlF_4$, $LiSbF_6$, and $LiWF_7$; lithium tungstate such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonate salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonato)borate salts such as a lithium di(malonato)borate salt and a lithium difluoro(malonato)borate salt; lithium (malonato)phosphate salts such as lithium tris(malonato)phosphate, lithium difluorodi(malonato) phosphate, and lithium tetrafluoro(malonato)phosphate; fluorine-containing organic lithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluoro(oxalato)borate and lithium di(oxalato)borate; and lithium oxalatophosphate salts such as lithium tetrafluoro(oxalato)phosphate, lithium difluorobis(oxalato)phosphate, and lithium tris(oxalato)phosphate.

In some embodiments, the electrolytic salt is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluoro(oxalato)borate, lithium bis(oxalato)borate, or lithium difluorobis(oxalato)phosphate. This helps to improve the performance of the electrochemical apparatus such as output power, high-rate charging and discharging, high-temperature storage, and cycling.

The concentration of the electrolytic salt is not particularly limited, provided that the effects of this application are not impaired. In some embodiments, a total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte is within a range defined by any two of the foregoing values. When the concentration of the electrolytic salt is within the foregoing range, the amount of lithium as charged particles would not be excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on a weight of the electrolytic salt, a percentage of the salt selected from a group consisting of monofluorophosphate, borate, oxalate, and fluorosulfonate is greater than 0.01% or greater than 0.1%. In some embodiments, based on the weight of the electrolytic salt, the percentage of the salt selected from the group consisting of monofluorophosphate, borate, oxalate, and fluorosulfonate is less than 20% or less than 10%. In some embodiments, the percentage of the salt selected from the group consisting of monofluorophosphate, borate, oxalate, and fluorosulfonate is within a range defined by any two of the foregoing values.

In some embodiments, the electrolytic salt includes one or more materials selected from the group consisting of monofluorophosphate, borate, oxalate, and fluorosulfonate, and one or more salts different from the one or more materials. The salt different from the one or more materials may include lithium salts exemplified above and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. In some embodiments, the salt different from the one or more materials is $LiPF_6$.

In some embodiments, based on the weight of the electrolytic salts, a percentage of the salt different from the one or more materials is greater than 0.01% or greater than 0.1%. In some embodiments, based on the weight of the electrolytic salts, the percentage of the salt different from the one or more materials is less than 20%, less than 15%, or less than 10%. In some embodiments, the percentage of the salt different from the one or more materials is within a range defined by any two of the foregoing values. The salt different from the one or more materials and of the foregoing percentage helps to balance the conductivity and viscosity of the electrolyte.

## III. Negative electrode

The negative electrode includes a negative electrode current collector and a positive electrode active material layer disposed on one or two surfaces of the negative electrode current collector, and the negative electrode active material layer includes a negative electrode active material. The negative electrode active material layer may be one layer or a plurality of layers, and each of the plurality of negative electrode active material layers may contain the same or

different negative electrode active materials. The negative electrode active material is any material capable of reversibly intercalating and deintercalating metal ions such as lithium ions. In some embodiments, a rechargeable capacity of the negative electrode active material is greater than a discharge capacity of the positive electrode active material to prevent lithium metal from unexpectedly precipitating onto the negative electrode during charging.

Any well-known current collector may be used as a current collector for holding the negative electrode active material. Instances of the negative electrode current collector include but are not limited to metal materials such as aluminum, copper, nickel, stainless steel, and nickel-plated steel. In some embodiments, the negative electrode current collector is made of copper.

In a case that the negative electrode current collector is made of a metal material, the form of the negative electrode current collector may include but is not limited to a metal foil, a metal cylinder, a metal coil, a metal plate, a metal film, a sheet metal mesh, a punched metal, and a foamed metal. In some embodiments, the negative electrode current collector is made of a metal film. In some embodiments, the negative electrode current collector is made of a copper foil. In some embodiments, the negative electrode current collector is made of a rolled copper foil based on a rolling method or an electrolytic copper foil based on an electrolytic method.

In some embodiments, the thickness of the negative electrode current collector is greater than 1 μm or greater than 5 μm. In some embodiments, the thickness of the negative electrode current collector is less than 100 μm or less than 50 μm. In some embodiments, the thickness of the negative electrode current collector is within a range defined by any two of the foregoing values.

The negative electrode active material is not particularly limited, provided that it can reversibly absorb and release lithium ions. Instances of the negative electrode active material may include but are not limited to: carbon materials such as natural graphite and artificial graphite; metals such as silicon (Si) and tin (Sn); or oxides of metal elements such as Si and Sn. The negative electrode active materials may be used alone or in combination.

The negative electrode active material layer may further include a negative electrode binder. The negative electrode binder can improve binding between particles of the negative electrode active material and binding between the negative electrode active material and the current collector. The negative electrode binder is not particularly limited in type, provided that its material is stable to the electrolyte or a solvent used in the manufacture of electrodes. In some embodiments, the negative electrode binder includes a resin binder. Instances of the resin binder include but are not limited to fluororesins, polyacrylonitrile (PAN), polyimide resins, acrylic resins, and polyolefin resins. When an aqueous solvent is used to prepare a negative electrode mixture slurry, the negative electrode binder includes but is not limited to carboxymethyl cellulose (CMC) or its salt, styrene-butadiene rubber (SBR), polyacrylic acid (PAA) or its salt, and polyvinyl alcohol.

The negative electrode may be prepared by using the following method: applying the negative electrode mixture slurry containing the negative electrode active material, the resin binder, and the like on the negative electrode current collector, and after drying, performing rolling to form a negative electrode active material layer on two surfaces of the negative electrode current collector, to obtain the negative electrode.

## IV. Separator

In order to prevent short circuit, a separator is typically provided between the positive electrode and the negative electrode. In this case, the electrolyte of this application typically infiltrates the separator.

The material and shape of the separator are not particularly limited, provided that the separator does not significantly impair the effects of this application. The separator may be resin, glass fiber, an inorganic material, or the like that is formed of a material stable to the electrolyte of this application. In some embodiments, the separator includes a porous sheet or nonwoven fabric-like material having an excellent fluid retention property, or the like. Instances of the material of the resin or glass fiber separator may include but are not limited to polyolefin, aromatic polyamide, polytetrafluoroethylene, and polyethersulfone. In some embodiments, the polyolefin is polyethylene or polypropylene. In some embodiments, the polyolefin is polypropylene. The materials of the separator may be used alone or in any combination.

The separator may alternatively be a material formed by stacking the foregoing materials, and instances thereof include but are not limited to a three-layer separator formed by stacking polypropylene, polyethylene, and polypropylene in order.

Instances of the material of the inorganic material may include but are not limited to: oxides such as aluminum oxide and silicon dioxide; nitrides such as aluminum nitride and silicon nitride; and sulfate (for example, barium sulfate and calcium sulfate). The form of the inorganic material may include but is not limited to a granular or fibrous form.

The form of the separator may be a thin-film form, and instances thereof include but are not limited to a non-woven fabric, a woven fabric, and a microporous film. In the thin-film form, the separator has a pore diameter of 0.01 μm to 1 μm and a thickness of 5 μm to 50 μm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a

separator that is obtained by using fluororesin as a binder to form a porous layer on two surfaces of the positive electrode with aluminum oxide particles of which 90% have a particle size less than 1 μm.

The thickness of the separator is random. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator is within a range defined by any two of the foregoing values. When the thickness of the separator is within the foregoing range, its insulation performance and mechanical strength can be ensured, and the rate performance and energy density of the electrochemical apparatus can also be ensured.

When a porous material such as a porous sheet or a nonwoven fabric is used as the separator, the porosity of the separator is random. In some embodiments, the porosity of the separator is greater than 10%, greater than 15%, or greater than 20%. In some embodiments, the porosity of the separator is less than 60%, less than 50%, or less than 45%. In some embodiments, the porosity of the separator is within a range defined by any two of the foregoing values. When the porosity of the separator is within the foregoing range, its insulation performance the mechanical strength can be ensured and film resistance can be suppressed, so that the electrochemical apparatus has good safety performance.

The average pore diameter of the separator is also random. In some embodiments, the average pore diameter of the separator is less than 0.5 μm or less than 0.2 μm. In some embodiments, the average pore diameter of the separator is greater than 0.05 μm. In some embodiments, the average pore diameter of the separator is within a range defined by any two of the foregoing values. If the average pore diameter of the separator exceeds the foregoing range, a short circuit is likely to occur. When the average pore diameter of the separator is within the foregoing range, the electrochemical apparatus has good safety performance.

## V. Assemblies of electrochemical apparatus

The assemblies of the electrochemical apparatus include an electrode assembly, a collector structure, an outer packing case, and a protective element.

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly is within a range defined by any two of the foregoing values. When the occupancy of the electrode assembly is within the foregoing range, the capacity of the electrochemical apparatus can be ensured, degradation in repeated charge/discharge performance and high temperature storage property caused by an increasing internal pressure can be suppressed.

The collector structure is not particularly limited. In some embodiments, the collector structure is a structure to reduce the resistance of wiring portions and bonding portions. When the electrode assembly is the foregoing laminated structure, a structure in which metal core portions of the electrode layers are bundled and welded to terminals can be used. An increase in electrode area of an electrode layer causes a higher internal resistance; therefore, it is also acceptable that more than two terminals are provided in the electrode to decrease the resistance. When the electrode assembly has the foregoing winding structure, two or more lead structures are provided at each of the positive electrode and the negative electrode, and are bundled at the terminals, so as to reduce the internal resistance.

The material of the outer packing case is not particularly limited, provided that the material is a material stable to the electrolyte in use. The outer packing case may use but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes but is not limited to a sealed packaging structure formed by depositing metal through laser welding, resistance welding, or ultrasonic welding; or a riveting structure formed by using the foregoing metal or the like with a resin pad disposed therebetween. The outer packing case using the laminated film includes but is not limited to a sealed packaging structure formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

The protective element may use a positive temperature coefficient (PTC), a temperature fuse, or a thermistor whose resistance increases during abnormal heat release or flowing of excessive current, a valve (current cutoff valve) for cutting off a current flowing in a circuit by sharply increasing an internal pressure or an internal temperature of a battery

during abnormal heat release, or the like. The protective element may be selected from elements that do not operate in conventional high-current use scenarios, or such design may be used that abnormal heat release or thermal runaway does not occur even without a protective element.

The electrochemical apparatus according to this application includes any apparatus in which electrochemical reactions take place. Specific instances of the apparatus include lithium metal secondary batteries or lithium-ion secondary batteries.

This application further provides an electronic apparatus, including the electrochemical apparatus according to this application.

The electrochemical apparatus according to this application is not particularly limited to any purpose, and may be used for any known electronic apparatus in the prior art. In some embodiments, the electrochemical apparatus according to this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

The following uses a lithium-ion battery as an example and describes the preparation of lithium-ion batteries with reference to specific examples. Those skilled in the art understand that the preparation method described in this application is only an example and that all other suitable preparation methods fall within the scope of this application.

## Examples

### I. Preparation of lithium-ion battery

1. Preparation of negative electrode

Artificial graphite, styrene-butadiene rubber, and sodium carboxymethylcellulose at a mass ratio of 96%:2%:2% were mixed in deionized water. The mixture was stirred evenly to obtain a negative electrode slurry. The negative electrode slurry was applied onto a 9 μm copper foil, followed by drying, cold pressing, cutting, and tab welding, to obtain a negative electrode.

2. Preparation of positive electrode

(1) Preparation of lithium cobalt oxide positive electrode active material containing aluminum, zirconium, and tungsten: Anhydrous ethanol and deionized water were mixed at a volume ratio of 7:3 to obtain a solution; 0.05 mol of nickel nitrate hexahydrate, 0.02 mol of cobalt nitrate hexahydrate, 0.03 mol of manganese acetate tetrahydrate, certain amounts of aluminum sulfate and zirconium sulfate were added to the solution, and ultrasonic stirring was performed to completely dissolve them; a resulting mixed solution was transferred to a medium 500 mL high-pressure reactor, and 0.6 mol of ammonium bicarbonate was added to the reactor; the reactor was heated to and kept at 120°C for 8 hours and then cooled, and the solution was centrifuged for separation; a precipitate was collected and washed with anhydrous ethanol 3 times, followed by vacuum drying at 60°C for 8 hours to produce a nickel-cobalt-manganese hydroxide precursor; and then, lithium carbonate, tungsten oxide, and the produced cobalt-manganese hydroxide precursor were fully mixed and ground, calcined in a tube furnace at 900°C for 20 hours, cooled and then ground again to obtain a lithium nickel cobalt manganate positive electrode active material containing aluminum, zirconium, and tungsten.

(2) Preparation of lithium cobalt oxide positive electrode active material containing aluminum, zirconium, and tungsten: A certain amount of $Co_3O_4$ and LiOH powder were weighed, fully mixed and ground in an agate mortar, followed by calcination at 900°C for 10 hours to produce a mixture; and certain amounts of aluminum sulfate, zirconium sulfate, and sodium tungstate were added to the calcined mixture, and ethanol was added as a solvent, and then a resulting mixture was ball-milled for 10 hours and calcined at 800°C for 10 hours to obtain a lithium cobalt oxide positive electrode active material containing aluminum, zirconium, and tungsten.

The positive electrode active material, carbon nanotubes, and polyvinylidene fluoride at a mass ratio of 97:1:2 were mixed with N-methylpyrrolidone (NMP) and stirred well to obtain a positive electrode slurry. The positive electrode slurry was applied onto a 12 μm aluminum foil, followed by drying, cold pressing, cutting, and tab welding, to obtain a positive electrode.

3. Preparation of electrolyte

In a dry argon environment, EC, PC, PP, and DEC were mixed (at a weight ratio of 1:1:1:1), added with $LiPF_6$ and mixed well to form a base electrolyte, where a concentration of $LiPF_6$ was 12.5%. Different amounts of additives were added to the base electrolyte, to obtain electrolytes used in different examples and comparative examples.

Abbreviations and full names of components in the electrolyte are listed in the following table.

| Name of material | Abbreviation | Name of material | Abbreviation |
|---|---|---|---|
| Ethylene carbonate | EC | Ethylene carbonate | PC |
| Diethyl carbonate | DEC | Fluoroethylene carbonate | FEC |
| Succinonitrile | SN | Adiponitrile | ADN |
| Ethylene glycol di(2-cyanoethyl) ether | EDN | 1,3,6-hexanetrinitrile | HTCN |
| 1,2,3-tris(2-cyanoethoxy) propane | TCEP | 1,3-propane sultone | PS |
| Ethylene sulfate | DTD | Compound of formula I-1 | Formula I-1 |
| Compound of formula I-3 | Formula I-4 | Compound of formula I-4 | Formula I-5 |
| Compound of formula II-1 | Formula II-1 | Compound of formula III-1 | Formula III-1 |
| Lithium difluorophosphat e | LDP | 1-propylphosphoric acid cyclic anhydride | T3P |
| Vinyl ethylene carbonate | VC | Propyl propionate | PP |

4. Preparation of separator

A polyethylene porous polymer film was used as the separator.

5. Preparation of lithium-ion battery

The obtained positive electrode, separator, and negative electrode were wound in order and placed in an outer packaging foil, with an injection opening left. An electrolyte was injected via the injection opening, followed by processes such as packaging, formation, and capacity grading, to obtain a lithium-ion battery.

**II. Test methods**

1. Method for testing overcharge deformation rate of lithium-ion battery

At 25°C, the lithium-ion battery was left standing for 30 minutes, charged to 4.45 V at a constant current of 0.5C, then charged to 0.05C at a constant voltage of 4.45 V, and left standing for 60 minutes. Thickness 1 of the lithium-ion battery was measured. Then, the lithium-ion battery was charged at a constant current rate of 0.1C for 60 minutes and left standing for 30 minutes. The steps of charging at 0.1C and standing were repeated for 5 times until the lithium-ion battery reached 150% state of charge (SOC). Thickness 2 of the lithium-ion battery was measured. The overcharge deformation rate of the lithium-ion battery was calculated by using the following formula:

$$\text{Overcharge deformation rate} = [(\text{thickness 2} - \text{thickness 1})/\text{thickness 1}] \times 100\%.$$

2. Method for testing high-temperature short-circuit deformation rate of lithium-ion battery

At 25°C, the lithium-ion battery was left standing for 30 minutes, charged to 4.7 V at a constant current of 0.5C, then charged to 0.05C at a constant voltage of 4.7 V, and left standing for 60 minutes. Thickness $T_1$ of the lithium-ion battery was measured. Then, the lithium-ion battery was short-circuited at 100 m$\Omega$ for 10 seconds. Then, thickness $T_2$ of the lithium-ion battery was measured. The high-temperature short-circuit deformation rate of the lithium-ion battery was calculated by using the following formula:

$$\text{Short-circuit deformation rate} = [(T_2 - T_1)/T_1] \times 100\%.$$

3. Method for testing thermal abuse thickness swelling rate of lithium-ion battery

At 25°C, the lithium-ion battery was left standing for 30 minutes, and thickness H1 of the lithium-ion battery was measured. Then, temperature rise was carried out at a temperature increase rate of 5°C/min. The temperature was kept for 30 minutes when rising to 130°C. Thickness H2 of the lithium-ion battery was measured. A thermal abuse thickness swelling rate of the lithium-ion battery was calculated according to the following formula:

$$\text{Thickness swelling rate} = [(H2-H1)/H1]\times 100\%.$$

**III. Test results**

Table 1 shows the influence of the positive electrode active material and the electrolyte on the overcharge resistance and safety of the lithium-ion battery under high temperature and high pressure. In Comparative examples 1-1 to 1-7 and Examples 1-1 to 1-4, the positive electrode active material was lithium nickel cobalt manganate with/without doping elements. In Comparative examples 1-8, the positive electrode active material was lithium cobalt oxide with aluminum, zirconium, and tungsten.

**Table 1**

| | Lithium nickel cobalt manganate/lithium cobalt oxide | | | Electrolyte | Overcharge deformation rate (%) | Short-circuit deformation rate (%) | Thickness swelling rate (%) |
|---|---|---|---|---|---|---|---|
| | Percentage a of aluminum (wt%) | Percentage b of zirconium (wt%) | Percentage c of tungsten (wt%) | Percentage x of SN (wt%) | | | |
| Comparative example 1-1 | 0.2 | 0 | 0 | 0 | 34.6 | 45.8 | 53.2 |
| Comparative example 1-2 | 0 | 0.1 | 0 | 0 | 43.1 | 43.7 | 51.2 |
| Comparative example 1-3 | 0 | 0 | 0.1 | 0 | 44.8 | 45.8 | 47.3 |
| Comparative example 1-4 | 0 | 0 | 0 | 4 | 47.2 | 41.8 | 42.9 |
| Comparative example 1-5 | 0.2 | 0.1 | 0 | 4 | 35.7 | 45.2 | 43.9 |
| Comparative example 1-6 | 0 | 0.1 | 0.1 | 4 | 40.1 | 43.7 | 42.6 |
| Comparative example 1-7 | 0.2 | 0 | 0.1 | 4 | 33.7 | 41.5 | 45.2 |
| Comparative example 1-8 | 0.05 | 0.1 | 0.1 | 4 | 18.7 | 17.5 | 18.6 |
| Example 1-1 | 0.05 | 0.1 | 0.1 | 4 | 16.3 | 14.2 | 13.8 |
| Example 1-2 | 0.1 | 0.05 | 0.1 | 4 | 14.2 | 13.9 | 13.6 |
| Example 1-3 | 0.3 | 0.1 | 0.05 | 4 | 14.5 | 14.1 | 14.7 |
| Example 1-4 | 0.2 | 0.2 | 0.1 | 4 | 14.8 | 14.5 | 15.1 |

As shown in Comparative examples 1-1 to 1-3, when lithium nickel cobalt manganate contained only one of elements aluminum, zirconium, and tungsten and the electrolyte contained no dinitrile compound, the overcharge deformation rate, short-circuit deformation rate, and thickness deformation rate of the lithium-ion battery were high. As shown in Comparative example 1-4, when the electrolyte contained the dinitrile compound but the positive electrode active material was undoped lithium nickel cobalt manganate, the overcharge deformation rate, short-circuit deformation rate, and thickness deformation rate of the lithium-ion battery were high. As shown in Comparative examples 1-5 to 1-7,

when the electrolyte contained the dinitrile compound but lithium nickel cobalt manganate contained only two of elements aluminum, zirconium, and tungsten, the overcharge deformation rate, short-circuit deformation rate, and thickness deformation rate of the lithium-ion battery were high. As shown in Comparative example 1-8, when the electrolyte contained the dinitrile compound but uses lithium cobalt oxide containing aluminum, zirconium, and tungsten as the positive electrode active material, the overcharge deformation rate, short-circuit deformation rate, and thickness deformation rate of the lithium-ion battery were high.

As shown in Examples 1-1 to 1-4, when lithium nickel cobalt manganate contained aluminum, zirconium, and tungsten and the electrolyte contained the dinitrile compound, the overcharge deformation rate, short-circuit deformation rate, and thickness deformation rate of the lithium-ion battery can be significantly reduced.

Table 2 shows the influence of the percentages of aluminum, zirconium, and tungsten in the positive electrode active material on the overcharge resistance and safety of the lithium-ion battery under high temperature and high pressure.The electrolyte used in the examples and comparative examples listed in Table 2 was the same as that in Example 1-1.

**Table 2**

| | Lithium nickel cobalt manganate | | | a+b+c | (b+-c)/a | b/c | Overcharge deformation rate (%) | Short-circuit deformation rate (%) | Thickness swelling rate (%) |
|---|---|---|---|---|---|---|---|---|---|
| | Percentage a of aluminum (wt%) | Percentage b of zirconium (wt%) | Percentage c of tungsten (wt%) | | | | | | |
| Example 1-1 | 0.05 | 0.1 | 0.1 | 0.25 | 4 | 1 | 16.3 | 14.2 | 13.8 |
| Example 2-1 | 0.2 | 0.3 | 0.1 | 0.6 | 2 | 3 | 14.7 | 13.6 | 13.2 |
| Example 2-2 | 0.2 | 0.4 | 0.2 | 0.8 | 3 | 2 | 13.1 | 13.2 | 12.7 |
| Example 2-3 | 0.5 | 0.2 | 0.2 | 0.9 | 0.8 | 1 | 18.8 | 17.1 | 17.6 |
| Example 2-4 | 0.5 | 0.3 | 0.2 | 1 | 1 | 1.5 | 17.9 | 15.8 | 14.6 |
| Example 2-5 | 0.05 | 0.03 | 0.02 | 0.1 | 1 | 1.5 | 16.4 | 16.3 | 15.9 |
| Example 2-6 | 0.6 | 0.5 | 0.1 | 1.2 | 1 | 5 | 25.9 | 24.2 | 26.7 |
| Example 2-7 | 0.01 | 0.01 | 0.05 | 0.07 | 6 | 0.2 | 28.7 | 26.1 | 29.3 |

The results show that when the percentage a% of aluminum, percentage b% of zirconium, and percentage c% of tungsten in the positive electrode active material satisfied at least one of the following conditions: $0.1 \leq a+b+c \leq 1$; $1 \leq (b+c)/a \leq 5$; or $1 \leq b/c \leq 3$, the overcharge deformation rate, short-circuit deformation rate, and thickness deformation rate of the lithium-ion battery can be further reduced.

Table 3 shows the influence of the relationship between the percentage of tungsten in the positive electrode active material and the percentage of the dinitrile compound in the electrolyte on the overcharge resistance and safety of the lithium-ion battery under high temperature and high pressure. Except for the parameters listed in Table 3, the settings in Examples 3-1 to 3-11 were the same as those in Example 1-1.

**Table 3**

| | Lithium nickel cobalt manganate | Dinitrile compound | | x/c | Overcharge deformation rate (%) | Short-circuit deformation rate (%) | Thickness swelling rate (%) |
|---|---|---|---|---|---|---|---|
| | Percentage c of tungsten (wt%) | Type | Percentage x (wt%) | | | | |
| Example 1-1 | 0.05 | ADN | 4 | 80 | 16.3 | 14.2 | 13.8 |
| Example 3-1 | 0.2 | EDN | 2 | 10 | 13.7 | 12.8 | 13.1 |
| Example 3-2 | 0.2 | ADN<br>SN | 2<br>4 | 30 | 12.4 | 12.2 | 12.8 |
| Example 3-3 | 0.2 | ADN<br>SN | 2<br>2 | 20 | 12.7 | 12.4 | 12.1 |
| Example 3-4 | 0.2 | ADN<br>SN | 4<br>6 | 50 | 11.7 | 11.3 | 11.9 |
| Example 3-5 | 0.1 | ADN<br>SN | 4<br>6 | 100 | 14.8 | 15.3 | 15.7 |
| Example 3-6 | 0.2 | SN<br>EDN | 2<br>4 | 30 | 12.4 | 13.1 | 12.3 |
| Example 3-7 | 0.2 | EDN | 4 | 20 | 13.2 | 13.7 | 13.5 |
| Example 3-8 | 0.2 | ADN<br>EDN | 2<br>4 | 30 | 11.5 | 11.9 | 12.1 |
| Example 3-9 | 0.05 | ADN<br>SN | 2<br>4 | 120 | 19.4 | 17.3 | 18.2 |
| Example 3-10 | 0.1 | ADN<br>SN | 0.4<br>0.4 | 8 | 17.9 | 19.5 | 19.1 |
| Example 3-11 | 1 | ADN<br>EDN | 2<br>4 | 6 | 21.3 | 20.5 | 32.1 |

The results show that when the percentage c% of tungsten in the positive electrode active material and the percentage x% of the dinitrile compound in the electrolyte satisfied 10≤x/c≤100, the overcharge deformation rate, short-circuit deformation rate, and thickness deformation rate of lithium ion battery can be further reduced.

Table 4 shows the influence of the dinitrile compound and trinitrile compound in the electrolyte on the overcharge resistance and safety of the lithium-ion battery under high temperature and high pressure. The positive electrode active materials used in Examples 4-1 to 4-14 were the same as those in Example 1-1.

**Table 4**

| | Dinitrile compound | | Trinitrile compound | | x+y | x/y | Overcharge deformation rate (%) | Short-circuit deformation rate (%) | Thickness swelling rate (%) |
|---|---|---|---|---|---|---|---|---|---|
| | Type | Percentage x (wt%) | Type | Percentage y (wt%) | | | | | |
| Example 1-1 | ADN | 4 | - | - | 4 | ∞ | 16.3 | 14.2 | 13.8 |
| Example 4-1 | ADN | 4 | HTCN | 1 | 5 | 4 | 14.2 | 12.3 | 12.6 |
| Example 4-2 | SN | 4 | HTCN | 1 | 5 | 4 | 13.4 | 12.1 | 11.9 |

(continued)

| | Dinitrile compound | | Trinitrile compound | | x+y | x/y | Overcharge deformation rate (%) | Short-circuit deformation rate (%) | Thickness swelling rate (%) |
|---|---|---|---|---|---|---|---|---|---|
| | Type | Percentage x (wt%) | Type | Percentage y (wt%) | | | | | |
| Example 4-3 | ADN | 4 | TCEP | 1 | 5 | 4 | 12.1 | 11.5 | 11.8 |
| Example 4-4 | SN | 4 | TCEP | 1 | 5 | 4 | 11.8 | 11.1 | 10.5 |
| Example 4-5 | ADN<br>SN | 2<br>4 | HTCN | 3 | 9 | 2 | 11.5 | 10.2 | 9.7 |
| Example 4-6 | ADNSN | 2<br>4 | TCEP | 3 | 9 | 2 | 11.2 | 10.3 | 8.5 |
| Example 4-7 | ADN<br>EDN | 2<br>1 | HTCN | 1 | 4 | 3 | 10.3 | 9.3 | 7.9 |
| Example 4-8 | ADN<br>EDN | 2<br>1 | TCEP | 1 | 4 | 3 | 10.2 | 8.9 | 7.4 |
| Example 4-9 | ADN<br>EDN | 2<br>1 | HTCN<br>TCEP | 1<br>1 | 5 | 1.5 | 9.8 | 8.3 | 7.3 |
| Example 4-10 | ADN<br>SN | 2<br>6 | HTCN<br>TCEP | 1<br>1 | 10 | 4 | 8.7 | 7.9 | 6.8 |
| Example 4-11 | ADNSN | 6<br>8 | TCEP | 1 | 15 | 14 | 19.5 | 18.3 | 16.1 |
| Example 4-12 | ADN | 4 | TCEP | 5 | 9 | 0.8 | 20.1 | 17.5 | 15.8 |
| Example 4-13 | SN | 0.5 | TCEP | 0.3 | 0.8 | 1.67 | 22.3 | 19.1 | 17.2 |
| Example 4-14 | ADN<br>SN | 4<br>7 | HTCN | 5 | 16 | 2.2 | 24.8 | 18.5 | 18.3 |

The results show that when the trinitrile compound was further added to the electrolyte containing the dinitrile compound, the overcharge deformation rate, short-circuit deformation rate, and thickness deformation rate of the lithium-ion battery can be further reduced.

In addition, when the percentage x% of the dinitrile compound and the percentage y% of the trinitrile compound in the electrolyte satisfied $1 \le x+y \le 15$ and/or $1 \le x/y \le 5$, the overcharge deformation rate, short-circuit deformation rate, and thickness deformation rate of lithium-ion battery can be further reduced.

Table 5 shows the influence of the relationship between the percentage of tungsten in the positive electrode active material and the percentage of the sulfur-oxygen double bond-containing compound in the electrolyte on the overcharge resistance and safety of the lithium-ion battery under high temperature and high pressure. Except for the parameters listed in Table 5, the settings in Examples 5-1 to 5-11 were the same as those in Example 1-1.

**Table 5**

| | Lithium nickel cobalt manganate | Sulfur-oxygen double bond-containing compound | | z/c | Overcharge deformation rate (%) | Short-circuit deformation rate (%) | Thickness swelling rate (%) |
|---|---|---|---|---|---|---|---|
| | Percentage c of tungsten (wt%) | Type | Percentage z (wt%) | | | | |
| Example 1-1 | 0.05 | - | - | 0 | 16.3 | 14.2 | 13.8 |
| Example 5-1 | 0.2 | PS | 2 | 10 | 11.6 | 11.4 | 12.5 |
| Example 5-2 | 0.2 | DTD | 0.5 | 2.5 | 11.4 | 11.1 | 11.9 |
| Example 5-3 | 0.2 | PS<br>DTD | 2<br>0.5 | 12.5 | 10.7 | 10.5 | 10.6 |
| Example 5-4 | 0.2 | Formula I-1 | 1 | 5 | 10.5 | 10.2 | 10.3 |
| Example 5-5 | 0.1 | Formula I-3 | 1 | 10 | 10.7 | 10.6 | 10.3 |
| Example 5-6 | 0.2 | Formula I-4 | 1 | 5 | 10.3 | 10.7 | 11.1 |
| Example 5-7 | 0.2 | Formula II-1 | 1 | 5 | 10.1 | 10.2 | 10.5 |
| Example 5-8 | 0.2 | PS<br>Formula I-1 | 2<br>1 | 15 | 9.7 | 9.8 | 10.1 |
| Example 5-9 | 0.05 | PS | 3 | 60 | 17.9 | 18.1 | 17.3 |
| Example 5-10 | 0.1 | PS | 0.08 | 0.8 | 21.6 | 22.2 | 24.7 |
| Example 5-11 | 0.05 | PS | 1 | 20 | 11.9 | 11.1 | 11.5 |

The results show that when the sulfur-oxygen double bond-containing compound was further added to the electrolyte containing the dinitrile compound, and the percentage x% of the dinitrile compound and the percentage z% of the sulfur-oxygen double bond-containing compound satisfied 1≤z/c≤50, the overcharge deformation rate, short-circuit deformation rate, and thickness deformation rate of lithium ion battery can be further reduced.

Table 6 shows the influence of further addition of additional compounds to the electrolyte on the overcharge resistance and safety of the lithium-ion battery under high temperature and high pressure. Except for the parameters listed in Table 6, the settings in Examples 6-1 to 6-10 were the same as those in Example 1-1.

**Table 6**

| | Additional components in electrolyte | Percentage (wt%) | Overcharge deformatio n rate (%) | Short-circuit deformation rate (%) | Thickness swelling rate (%) |
|---|---|---|---|---|---|
| Example 1-1 | - | - | 16.3 | 14.2 | 13.8 |
| Example 6-1 | LDP | 0.5 | 12.3 | 12.1 | 12.7 |
| Example 6-2 | Formula II-1 | 1 | 12.1 | 11.8 | 12.2 |

(continued)

| | Additional components in electrolyte | Percentage (wt%) | Overcharge deformatio n rate (%) | Short-circuit deformation rate (%) | Thickness swelling rate (%) |
|---|---|---|---|---|---|
| Example 6-3 | PS<br>DTD | 2<br>0.5 | 11.8 | 10.7 | 12.3 |
| Example 6-4 | FEC | 4 | 11.9 | 10.6 | 11.7 |
| Example 6-5 | VC | 1 | 12.1 | 10.3 | 11.5 |
| Example 6-6 | T3P | 1 | 12.5 | 10.1 | 11.3 |
| Example 6-7 | HTCN<br>LDP | 1<br>0.5 | 9.2 | 8.9 | 9.6 |
| Example 6-8 | HTCN<br>T3P | 1<br>1 | 9.3 | 8.5 | 8.9 |
| Example 6-9 | TCEP<br>FEC | 1<br>4 | 8.7 | 8.3 | 7.8 |
| Example 6-10 | TCEP<br>FEC<br>T3P | 1<br>4<br>1 | 7.6 | 7.1 | 7.3 |

The results show that when at least one of lithium difluorophosphate, the compound of formula III, fluoroethylene carbonate, vinylene carbonate, or 1-propyl phosphoric acid cyclic anhydride was added to the electrolyte containing the dinitrile compound, the overcharge deformation rate, short-circuit deformation rate, and thickness deformation rate of the lithium-ion battery can be further reduced.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, those skilled in the art should understand that the foregoing embodiments are not to be construed as limiting this application, and that some embodiments may be changed, replaced, and modified without departing from the spirit, principle, and scope of this application.

## Claims

**1.** An electrochemical apparatus, comprising: a positive electrode, a negative electrode, and an electrolyte, wherein the positive electrode comprises a positive electrode current collector and a positive electrode active material layer formed on the positive electrode current collector, and the positive electrode active material layer comprises a positive electrode active material, wherein

the positive electrode active material comprises lithium nickel cobalt manganate containing aluminum, zirconium, and tungsten; and
the electrolyte comprises a dinitrile compound.

**2.** The electrochemical apparatus according to claim 1, wherein based on a mass of the positive electrode active material, percentages of aluminum, zirconium, and tungsten are a%, b%, and c%, respectively, and a, b, and c satisfy: $0.1 \leq a+b+c \leq 1$.

**3.** The electrochemical apparatus according to claim 1, wherein based on a mass of the positive electrode active

material, percentages of aluminum, zirconium, and tungsten are a%, b%, and c%, respectively, and a, b, and c satisfy: $1 \leq (b+c)/a \leq 5$.

**4.** The electrochemical apparatus according to claim 1, wherein based on a mass of the positive electrode active material, percentages of zirconium and tungsten are b% and c%, respectively, and b and c satisfy: $1 \leq b/c \leq 3$.

**5.** The electrochemical apparatus according to claim 1, wherein

based on a mass of the positive electrode active material, a percentage of tungsten is c%;
based on a mass of the electrolyte, a percentage of the dinitrile compound is x%, and
c and x satisfy: $10 \leq x/c \leq 100$.

**6.** The electrochemical apparatus according to claim 1, wherein the electrolyte further comprises a trinitrile compound.

**7.** The electrochemical apparatus according to claim 6, wherein based on a mass of the electrolyte, a percentage of the dinitrile compound is x%, and a percentage of the trinitrile compound is y%; and x and y satisfy: $1 \leq x+y \leq 15$.

**8.** The electrochemical apparatus according to claim 7, wherein x and y satisfy: $1 \leq x/y \leq 5$.

**9.** The electrochemical apparatus according to claim 1, wherein

the electrolyte further comprises a sulfur-oxygen double bond-containing compound, and based on a mass of the electrolyte, a percentage of the sulfur-oxygen double bond-containing compound is z%;
based on a mass of the positive electrode active material, a percentage of tungsten is c%; and
z and c satisfy: $1 \leq z/c \leq 50$.

**10.** The electrochemical apparatus according to claim 9, wherein the sulfur-oxygen double bond-containing compound includes at least one of bicyclic sulfate, bicyclic sultone, ethylene sulfate, propylene sulfate, 1,3-propane sultone, 1,3-propene sultone, methylene methanedisulfonate, or ethylene methanedisulfonate.

**11.** The electrochemical apparatus according to claim 10, wherein the bicyclic sulfate comprises a compound of formula I:

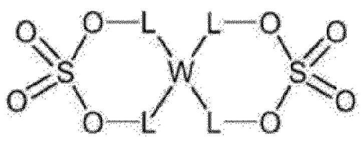 (formula I),

wherein

W is selected from

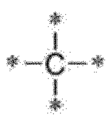 , 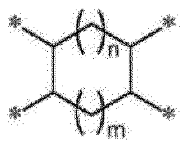 , 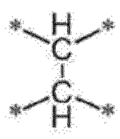 ,

or

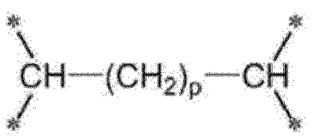 ;

L is independently selected from a single bond or a methylene group;
m is 1, 2, 3, or 4;
n is 0, 1, or 2; and

p is 0, 1, 2, 3,4, 5, or 6.

**12.** The electrochemical apparatus according to claim 11, wherein the compound of formula I comprises at least one of the following:

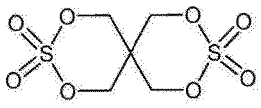 (formula I-1), 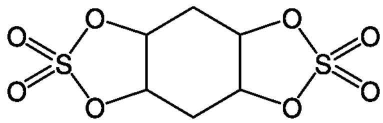 (formula I-2), 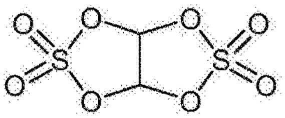 (formula I-3), 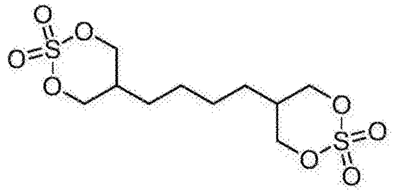 (formula I-4), or 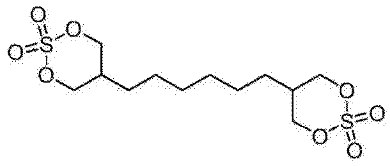 (formula I-5).

**13.** The electrochemical apparatus according to claim 10, wherein the bicyclic sultone comprises a compound of formula II:

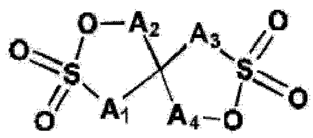 (formula II),

wherein $A_1$, $A_2$, $A_3$, and $A_4$ each are independently selected from a substituted or unsubstituted C1-3 alkylene group, and during substituation, a substituent is selected from a C1-5 alkyl group, halogen, or a halogenated C1-5 alkyl group.

**14.** The electrochemical apparatus according to claim 13, wherein the compound of formula II comprises at least one of the following:

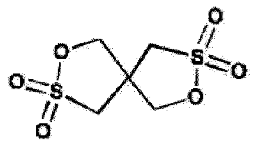 (formula II-1), 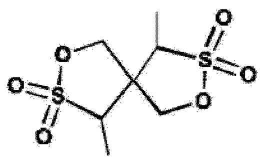 (formula II-2),

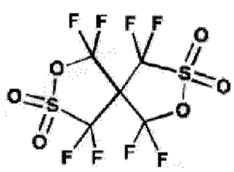 (formula II-3), 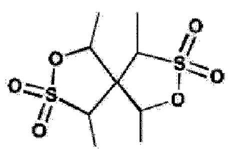 (formula II-4),

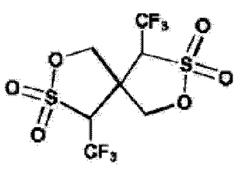 (formula II-5), 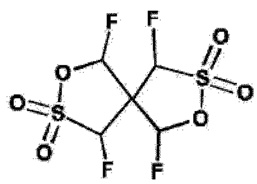 (formula II-6),

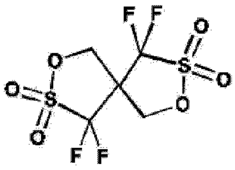 (formula II-7), 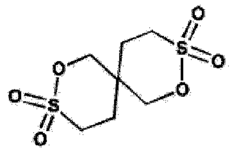 (formula II-8),

or

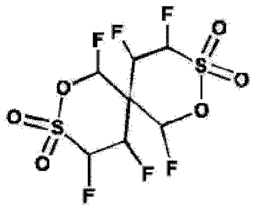 (formula II-9).

**15.** The electrochemical apparatus according to any one of claims 1 to 14, wherein the electrochemical apparatus satisfies at least one of following:

(a) based on a mass of the positive electrode active material, a percentage of aluminum is a%, with a value range of a from 0.05 to 1;
(b) based on the mass of the positive electrode active material, a percentage of zirconium is b%, with a value range of b from 0.05 to 1;
(c) based on the mass of the positive electrode active material, a percentage of tungsten is c%, with a value range of c from 0.05 to 1;
(d) based on a mass of the electrolyte, a percentage of the dinitrile compound is x%, with a value range of x from 0.1 to 15;
(e) the electrolyte further comprises a trinitrile compound, and based on the mass of the electrolyte, a percentage of the trinitrile compound is y%, with a value range of y from 0.1 to 8; or
(f) the electrolyte further comprises a sulfur-oxygen double bond-containing compound, and based on the mass of the electrolyte, a percentage of the sulfur-oxygen double bond-containing compound is z%, with a value range of z from 0.01 to 5.

**16.** The electrochemical apparatus according to claim 15, wherein the electrochemical apparatus satisfies at least one of the following:

(g) the value range of a is from 0.1 to 0.5;
(h) the value range of b is from 0.1 to 0.5;
(i) the value range of c is from 0.1 to 0.5;
(j) the value range of x is from 0.5 to 10;
(k) the value range of y is from 0.5 to 5; or
(1) the value range of z is from 0.1 to 3.

**17.** The electrochemical apparatus according to claim 1, wherein the electrolyte further comprises at least one of lithium difluorophosphate or a compound of formula III,

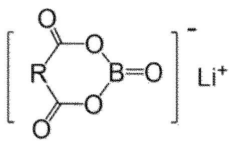 (formula III),

wherein R is a single bond or a Cl-4 alkylene group.

**18.** The electrochemical apparatus according to claim 1, wherein the electrolyte further comprises at least one of fluoroethylene carbonate, vinylene carbonate, or 1-propylphosphoric acid cyclic anhydride.

**19.** An electronic apparatus, comprising the electrochemical apparatus according to any one of claims 1 to 18.

**INTERNATIONAL SEARCH REPORT**

International application No.
**PCT/CN2021/142397**

**A. CLASSIFICATION OF SUBJECT MATTER**

H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 锂, 电池, 镍钴锰酸锂, 三元材料, 铝, 锆, 钨, 二腈, 过充, 安全, Li, lithium, batter???, cell?, NCM, ternary, Al, Zr, W, dinitrile, overcharg+, safety

**C. DOCUMENTS CONSIDERED TO BE RELEVANT**

| Category* | Citation of document, with indication, where appropriate, of the relevant passages | Relevant to claim No. |
|---|---|---|
| A | CN 109841831 A (NINGDE AMPEREX TECHNOLOGY LTD.) 04 June 2019 (2019-06-04) description, paragraphs 84-103 | 1-19 |
| A | CN 108199021 A (QINGHAI TAIFENG PULEAD LITHIUM ENERGY TECHNOLOGY CO., LTD.) 22 June 2018 (2018-06-22) entire document | 1-19 |
| A | CN 110010902 A (NINGDE AMPEREX TECHNOLOGY LTD.) 12 July 2019 (2019-07-12) entire document | 1-12 |
| A | CN 109841794 A (NINGDE AMPEREX TECHNOLOGY LTD.) 04 June 2019 (2019-06-04) entire document | 1-19 |
| A | JP 2008053054 A (SONY CORP.) 06 March 2008 (2008-03-06) entire document | 1-19 |
| A | US 2009011333 A1 (SONY CORP.) 08 January 2009 (2009-01-08) entire document | 1-19 |

☐ Further documents are listed in the continuation of Box C.　　☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 July 2022** | **01 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/142397**

| Patent document cited in search report | Publication date (day/month/year) | Patent family member(s) | Publication date (day/month/year) |
|---|---|---|---|
| CN 109841831 A | 04 June 2019 | WO 2020187106 A1 | 24 September 2020 |
| | | US 2021351405 A1 | 11 November 2021 |
| | | EP 3900085 A1 | 27 October 2021 |
| | | JP 2021536104 A | 23 December 2021 |
| | | CN 109841831 B | 25 December 2020 |
| | | IN 202137009363 A | 17 September 2021 |
| | | EP 3900085 A4 | 26 January 2022 |
| CN 108199021 A | 22 June 2018 | None | |
| CN 110010902 A | 12 July 2019 | US 2020313171 A1 | 01 October 2020 |
| CN 109841794 A | 04 June 2019 | US 2020313176 A1 | 01 October 2020 |
| | | CN 109841794 B | 20 July 2021 |
| JP 2008053054 A | 06 March 2008 | None | |
| US 2009011333 A1 | 08 January 2009 | KR 20090004656 A | 12 January 2009 |
| | | CN 104143625 A | 12 November 2014 |
| | | CN 101339984 A | 07 January 2009 |
| | | JP 2009016245 A | 22 January 2009 |
| | | US 2014329144 A1 | 06 November 2014 |
| | | JP 5151278 B2 | 27 February 2013 |
| | | US 8815446 B2 | 26 August 2014 |
| | | KR 101486944 B1 | 29 January 2015 |
| | | CN 104143625 B | 14 July 2017 |

Form PCT/ISA/210 (patent family annex) (January 2015)